# EUROPEAN PATENT APPLICATION

(11) **EP 3 346 325 A1**
(43) Date of publication of application: **11.07.2018**
(21) Application number: 17832459.6
(22) Date of filing: 27.06.2017
(51) Int. Cl.: G02F 1/13357

(54) **BACKLIGHT MODULE AND DISPLAY DEVICE**

(30) Priority: 10.11.2016 CN 201621214971 U
(71) Applicant: BOE Technology Group Co., Ltd., Beijing Anhui 100015 (CN); Hefei Xinsheng Optoelectronics Technology Co., Ltd, Anhui 230012 (CN)
(72) Inventor: XU, Haifeng, Beijing 100176 (CN); SHIN, Mookeun, Beijing 100176 (CN); MA, Rui, Beijing 100176 (CN); LIU, Rongcheng, Beijing 100176 (CN); HUANG, Jianming, Beijing 100176 (CN)
(74) Representative: AWA Sweden AB
(86) International application number: PCT/CN2017/090313
(87) International publication number: WO 2018/086356

(57) **Abstract**

The present disclosure relates to a field of optical technology, and discloses a backlight assembly and a display device. The backlight assembly includes a frame, an optical film, a light guide plate and a fixing structure; the optical film is located on a light-emitting side of the light guide plate, and the frame is located on a side of the optical film; the fixing structure comprises a first fixing sub-structure on the optical film and a second fixing sub-structure on the frame, and the first fixing sub-structure is engaged with the second fixing sub-structure.

## Description

### CROSS-REFERENCE TO RELATED APPLICATION

This application claims the benefit of Chinese Patent Application 201621214971.7 filed on November 10, 2016 in the State Intellectual Property Office of China, the whole disclosure of which is incorporated herein by reference.

### Technical Field

The present disclosure relates to a field of optical technology, and particularly to a backlight assembly and a display device.

### Description of the Related Art

A backlight assembly is fixed on the back of a liquid crystal display (LCD). The backlight assembly includes a light guide plate and an optical film on a light-emitting surface of the light guide plate. Reliability of positioning the optical film will directly affect the optical quality of the backlight assembly.

In the prior art, the optical film is usually positioned on a back plate by using a metal positioning column. The optical film includes lugs thereon, and the lugs include openings. When assembling the backlight assembly, an end of the metal positioning column is fixed on the back plate and the other end sequentially passes through the openings in the lugs and is fixed by an expansion part.

However, in practice, it has been found that positioning the optical film with the method in the prior art requires that the metal positioning column needs to be fixed on the back plate during assembly of the backlight assembly. It poses some difficulties and requires to provide an elastomer on the back plate to fix the metal positioning column, thereby the structure of the backlight assembly being complex and difficult to be installed. Further, the optical film tends to be detached from a side away from the back plate due to deformation of the expansion part, thereby degrading the optical performance of the backlight assembly.

### SUMMARY

In order to solve at least a part or all of the above problems, the embodiments of the present disclosure provide a backlight assembly and a display device. The technical solutions are described as follows.

According to an aspect of the present disclosure, there is provided a backlight assembly, comprising:
a frame, an optical film, a light guide plate and a fixing structure;
the optical film is located on a light-emitting side of the light guide plate, and the frame is located on a side surface of the optical film; and wherein
the fixing structure comprises a first fixing sub-structure on the optical film and a second fixing sub-structure on the frame, and the first fixing sub-structure is engaged with the second fixing sub-structure.

Optionally, the frame comprises a strip frame and a strip-shaped extension structure on a side surface of the strip frame, an edge of the optical film is located in a bent area formed by a side of the strip frame and a side of the strip-shaped extension structure;
the first fixing sub-structure comprises lugs at at least one end of the optical film, and each of the lugs is provided with a groove at a side thereof facing away from the light guide plate; the second fixing sub-structure comprises protrusions on a side of the strip-shaped extension structure, and the protrusions are engaged in the grooves.

Optionally, the backlight assembly further comprises:
a back plate comprising a bottom plate and a strip structure at at least one end of the bottom plate, and
wherein the light guide plate is located between the optical film and the bottom plate, and the strip structure has a slot into which the edge of the lug is engaged.

Optionally, the optical film is a rectangular film, and the lugs are located on a long side of the optical film.

Optionally, the lugs are arranged symmetrically, and a symmetry axis of the lugs coincides with a symmetry axis of the optical film.

Optionally, each of the at least one side of the optical film has a plurality of the lugs arranged to be symmetrical about a symmetry axis;
the frame comprises the strip frame and a plurality of strip-shaped extension structures arranged to be symmetrical about a symmetry axis and located on a side surface of the strip frame, and an arrangement direction of the plurality of lugs and an arrangement direction of the plurality of strip-shaped extension structure are same.

Optionally, the backlight assembly further comprises:
a reflective sheet on a bottom side of the light guide plate and between the light guide plate and the bottom plate.

Optionally, the groove is a round through hole or a round blind hole, and the protrusion is a cylindrical protrusion.

According to another aspect of the present disclosure, there is provided display device comprising:
the backlight assembly described above, and
a display panel, an edge of which is located in a bent area formed by a side of the strip frame and the other side of the strip-shaped extension structure.

Optionally, the display device further comprises:
a front bezel located outside of the frame and surrounding an edge of the display panel facing away from the optical film.

### BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show merely some embodiments of the present disclosure, and do not constitute a limitation to the present disclosure.
Fig. 1 is a schematic structural diagram of a backlight assembly according to an embodiment of the present disclosure;
Fig. 2-1 is a schematic structural diagram of a backlight assembly according to an embodiment of the present disclosure;
Fig. 2-2 is a schematic structural diagram of another backlight assembly according to an embodiment of the present disclosure;
Fig. 3-1 is a schematic structural diagram of an optical film according to an embodiment of the present disclosure;
Fig. 3-2 is a schematic structural diagram of another optical film according to an embodiment of the present disclosure;
Fig. 4 is a schematic structural diagram of a backlight assembly according to an embodiment of the present disclosure; and
Fig. 5 is a schematic structural diagram of a display device according to an embodiment of the present disclosure.

### DETAILED DESCRIPTION OF PREFERRED EMBODIMENTS

To make the objectives, technical solutions, and advantages of the present disclosure more comprehensible, the embodiments of the present disclosure are further described in detail below with reference to the accompanying drawings.

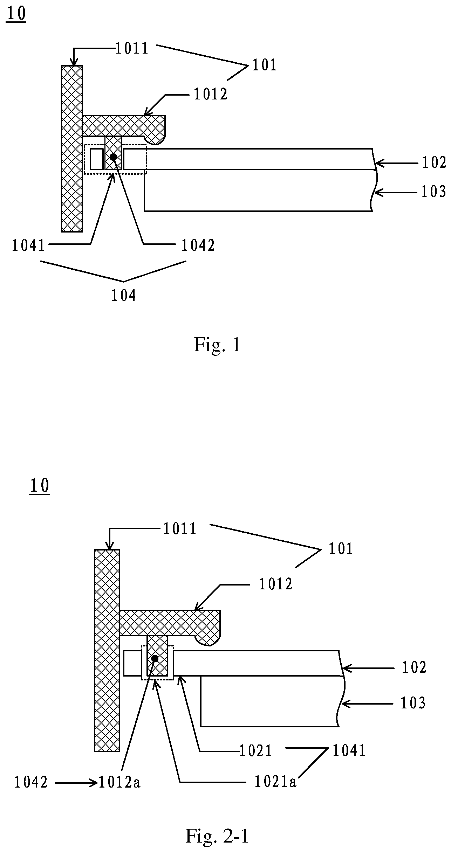

The embodiments of the present disclosure provide a backlight assembly 10. As shown in Fig. 1, the backlight assembly 10 includes:
a frame 101, an optical film 102, a light guide plate 103 and a fixing structure 104. The frame 101 may be a plastic frame.

The optical film 102 is disposed on a light-emitting side of the light guide plate 103. The frame 101 is disposed on a side surface of the optical film 102.

The fixing structure 104 may include a first fixing sub-structure 1041 disposed on the optical film 102 and a second fixing sub-structure 1042 disposed on the frame 101. The first fixing sub-structure 1041 may be engaged with the second fixing sub-structure 1042.

In summary, in the backlight assembly provided by the embodiments of the present disclosure, the optical film is fixed by the arrangement in which the first fixing sub-structure is disposed on the optical film and the second fixing sub-structure is disposed on the frame, and the first fixing sub-structure is engaged with the second fixing sub-structure, which simplifies the structure of the backlight assembly while it is difficult to detach the optical film from the side away from the back plate, such that the optical quality of the backlight assembly is guaranteed.

Further, as shown in Fig. 1, the frame 101 may include a strip frame 1011 and a strip-shaped extension structure 1012 located on a side surface of the strip frame 1011. The edge of the optical film 102 is located in a bent area formed by a side of the strip frame 1011 and a side of the strip-shaped extension structure 1012.

It should be noted that the strip-shaped extension structure 1012 is located at a middle position on the side of the strip frame 1011, i.e., at a non-end position.

Alternatively, the fixing structure 104 of the backlight assembly 10 provided by the embodiment of the present disclosure may have two optional structures, including:
In a first optional structure, as shown in Fig. 2-1, the first fixing sub-structure 1041 may include lugs 1021 disposed at at least one end of the optical film 102, and a groove 1021a is located on a side of each lug 1021 facing away from the light guide plate 103. The lugs 1021 and the grooves 1021a provided on the lugs 1021 constitute the first fixing sub-structure 1041.The second fixing sub-structure 1042 may comprise protrusions 1012a disposed on a side of the strip-shaped extension structure 1012, and the protrusions 1012a may be engaged in the grooves1021a. By engaging the protrusion 1012a disposed on the frame into the groove 1021a of the lugs of the optical film, the optical film may be effectively prevented from being detached from a side of the strip-shaped extension structure, so as to guarantee the optical quality of the backlight assembly.

Optionally, the optical film may include a brightness enhancement sheet and a diffusion sheet, and the optical film has a thickness of 0.8 mm.

Optionally, the lugs 1021 may be of a rectangular structure, and any side of the lugs 1021 may have a length greater than or equal to 3 mm.

Optionally, the groove 1021a may be a round through hole or a round blind hole, and the groove may have a diameter in a range of 2.2 mm to 2.5 mm; the protrusion 1012a may be a cylindrical protrusion, and the protrusion may have a diameter of 2 mm, and a height of 1.5 mm. It should be noted that, the embodiments of the present disclosure does not limit the diameter of the groove as well as the diameter and the thickness of the protrusions. The size is optional and can be any other sizes, as long as such sizes of the grooves and the protrusions may correspond to each other to achieve an engagement.

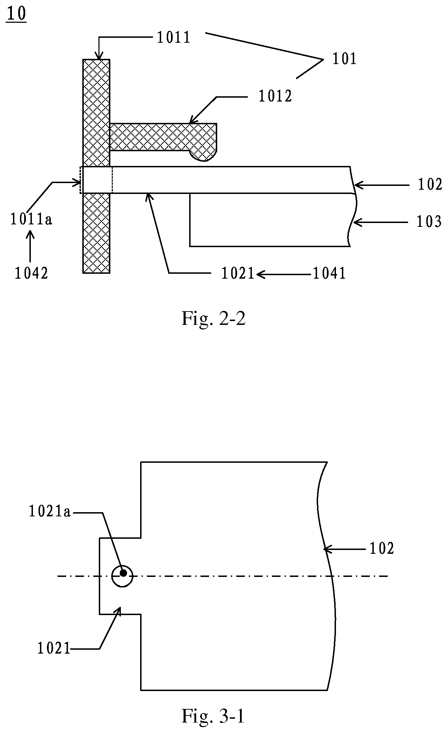

In a second optional structure, as shown in Fig. 2-2, the first fixing sub-structure 1041 may include lugs 1021 disposed at at least one end of the optical film 102. The second fixing sub-structure 1042 may include slots 1011a disposed on the strip frame 1011, and edges of the lugs 1021 may be engaged in the slots 1011a. By providing the lug of the optical film with an appropriate side length, the lug may be engaged into the slot of the strip frame, thereby reducing the risk that the optical film is detached from the side away from the light guide plate and ensuring the optical quality of the backlight assembly within a certain extent.

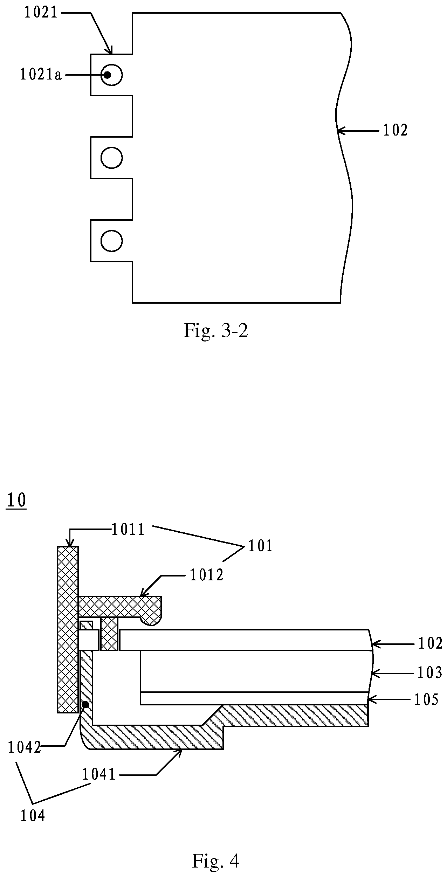

In practical applications, the lugs may be disposed on the optical film according to actual requirements. When the size of the optical film is smaller, for example, the size of the optical film is less than or equal to 27 inches, as shown in Fig. 3-1, only one lug 1021 is provided on a long side of the optical film 102. In the first optional fixing structure, a groove 1021a is provided in the lug 1021. It should be noted that the lugs 1021 are arranged symmetrically, and a symmetry axis of the lug 1021 coincides with a symmetry axis of the optical film 102. When the size of the optical film is relative larger, for example, the size of the optical film is larger than 27 inches, as shown in Fig. 3-2, a plurality of lugs 1021 may be arranged on the long side of the optical film 102 and may be symmetrically arranged about the symmetry axis. According to the actual requirements, it is also possible to provide lugs on each side of the optical film. It should be noted that, the frame may include a strip frame and a plurality of strip-shaped extension structures arranged to be symmetrical about the symmetry axis and located at a side of the strip frame, an arrangement direction of the plurality of lugs and an arrangement direction of the plurality of strip-shaped extension structure are same. That is, in the first optional fixing structure, the groove in each of the plurality of lugs corresponds to a protrusion on a strip-shaped extension structure.

Optionally, the material of the frame may be polycarbonate. It should be noted that polycarbonate has characteristics such as a high mechanical strength and a good creep resistance. Even if it is subjected to a low temperature, the polycarbonate still has a very high impact resistance. Due to a high dimension stability of the polycarbonate, when the molten polycarbonate material is injection-molded into a frame provided with protrusions, the protrusions has a high mechanical strength and doesn't tend to be worn by the optical film, improving stability of the fixing structure.

Further, as shown in Fig. 4, the backlight assembly 10 may further include a back plate 104. The back plate 104 includes a bottom plate 1041 and a strip structure 1042 disposed at at least one end of the bottom plate 1041. The light guide plate 103 is disposed between the optical film 102 and the bottom plate 1041. A slot is disposed in the strip structure 1042. The edge of the lug 1021 may be engaged in the slot. The arrangement in which the slot is arranged in the strip structure so that the edge of the lug of the optical film may be engaged in the slot to achieve positioning the optical film so as to facilitate the subsequent assembly of the backlight assembly.

Optionally, the back plate may be a galvanized plate, or an aluminum plate, or may also be a stainless steel plate. Embodiments of the present disclosure do not limit the material of the back plate.

It should be noted that the optical film 102 is a rectangular film, and the lugs 1021 may be located on the long side of the optical film 102. In practical applications, it is found that the optical film tends to be detached from a long side, so that the lugs may be provided on the long side of at least one side of the optical film to fix the optical film. When the backlight assembly is a symmetrical structure, the structure on the opposite side of the backlight assembly may refer to the structure on the side of the backlight assembly 10 in Fig. 4.

Still further, as shown in Fig. 4, the backlight assembly 10 may further include a reflective sheet 105 which is disposed on a bottom side of the light guide plate 103 and between the light guide plate 103 and the bottom plate 1041.

Specifically, when the backlight assembly operates, the light emitted by a light bar is transmitted by the light guide plate, and the reflective sheet below the light guide plate can reflect the light escaping from the bottom surface of the light guide plate back to the light guide plate to improve the utilization rate of light. The optical film also has a diffusion sheet for fogging the light. The diffusion sheet provides uniform and soft light for the display device, and finally, the front brightness of the light is enhanced by a brightness enhancement sheet in the optical film.

In summary, in the backlight assembly provided by the embodiments of the present disclosure, the optical film is fixed by the arrangement in which the first fixing sub-structure is disposed on the optical film and the second fixing sub-structure is disposed on the frame, and the first fixing sub-structure and the second fixing sub-structure are engaged to each other, which simplifies the structure of the backlight assembly and it is difficult to detach the optical film from the side away from the back plate, so as to ensure the optical quality of the backlight assembly.

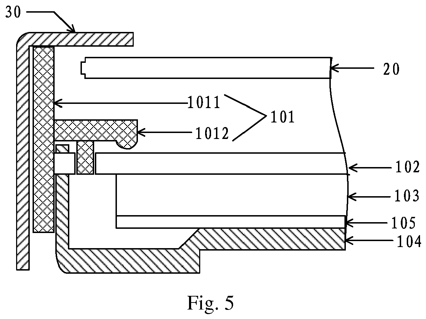

The embodiment of the present disclosure further provides a display device. As shown in Fig. 5, the display device includes a backlight assembly which may the one shown in Fig. 1 or Fig. 2-1 or Fig. 2-2 or Fig. 4.

It should be noted that, as shown in Fig. 5, the frame 101 in the backlight assembly 10 includes a strip frame 1011 and a strip-shaped extension structure 1012 located on the side of the strip frame 1011. The edge of the optical film 102 is located in a bent area formed by a side of the strip frame 1011 and a side of the strip-shaped extension structure 1012. The display device may further include a display panel 20, the edge of which is located in a bent area formed by a side of the strip frame 1011 and the other side of the strip-shaped extension structure 1012.

Further, as shown in Fig. 5, the display device may further include a front bezel 30 located outside of the frame 101 and surrounds the edge of the display panel 20 facing away from the optical film 102.

When being implemented, the display device provided by the embodiments of the present disclosure may be any product or component having a display function, such as a mobile phone, a tablet computer, a television, a display, a notebook computer, a digital photo frame, a navigator.

In summary, in the backlight assembly provided by the embodiment of the present disclosure, the optical film is fixed by the arrangement in which the first fixing sub-structure is disposed on the optical film and the second fixing sub-structure is disposed on the frame, and the first fixing sub-structure and the second fixing sub-structure are engaged to each other, which simplifies the structure of the backlight assembly and it is difficult to detach the optical film from the side away from the back plate, so as to ensure the optical quality of the backlight assembly.

The contents described above are only the preferred embodiments of the present disclosure and are not intended to limit the present disclosure. Any modifications, equivalent substitutions, improvements, etc. made within the spirit and principle of the disclosure should be included in the protection scope of the present disclosure.

## Claims

1. A backlight assembly, comprising:
a frame, an optical film, a light guide plate and a fixing structure;
the optical film is located on a light-emitting side of the light guide plate, and the frame is located on a side surface of the optical film; and wherein
the fixing structure comprises a first fixing sub-structure on the optical film and a second fixing sub-structure on the frame, and the first fixing sub-structure is engaged with the second fixing sub-structure.

2. The backlight assembly according to claim1, wherein
the frame comprises a strip frame and a strip-shaped extension structure on a side surface of the strip frame, an edge of the optical film is located in a bent area formed by a side of the strip frame and a side of the strip-shaped extension structure;
the first fixing sub-structure comprises lugs at at least one end of the optical film, and each of the lugs is provided with a groove at a side thereof facing away from the light guide plate; the second fixing sub-structure comprises protrusions on a side of the strip-shaped extension structure, and the protrusions are engaged in the grooves.

3. The backlight assembly according to claim 2, wherein the backlight assembly further comprises:
a back plate comprising a bottom plate and a strip structure at at least one end of the bottom plate, and
wherein the light guide plate is located between the optical film and the bottom plate, and the strip structure has a slot into which the edge of the lug is engaged.

4. The backlight assembly according to claim 2, wherein the optical film is a rectangular film, and the lugs are located on a long side of the optical film.

5. The backlight assembly according to claim 4, wherein
the lugs are arranged symmetrically, and a symmetry axis of the lugs coincides with a symmetry axis of the optical film.

6. The backlight assembly according to claim 4, wherein
each of the at least one side of the optical film has a plurality of the lugs arranged to be symmetrical about a symmetry axis;
the frame comprises the strip frame and a plurality of strip-shaped extension structures arranged to be symmetrical about a symmetry axis and located on a side surface of the strip frame, and an arrangement direction of the plurality of lugs and an arrangement direction of the plurality of strip-shaped extension structure are same.

7. The backlight assembly according to claim 3, wherein the backlight assembly further comprises:
a reflective sheet on a bottom side of the light guide plate and between the light guide plate and the bottom plate.

8. The backlight assembly according to claim 2, wherein
the groove is a round through hole or a round blind hole, and the protrusion is a cylindrical protrusion.

9. A display device comprising:
the backlight assembly according to any one of claims 1-8, and
a display panel, an edge of which is located in a bent area formed by a side of the strip frame and the other side of the strip-shaped extension structure.

10. The display device according to claim 9, wherein the display device further comprises:
a front bezel located outside of the frame and surrounding an edge of the display panel facing away from the optical film.
